Europäisches Patentamt

European Patent Office

Office européen des brevets

(19)

(11) Veröffentlichungsnummer: **0 245 643**
A2

(12) **EUROPÄISCHE PATENTANMELDUNG**

(21) Anmeldenummer: 87104994.6

(22) Anmeldetag: 03.04.87

(51) Int. Cl.³: **B 26 D 3/00**

(30) Priorität: 14.04.86 DE 3612497
16.05.86 DE 3616666

(43) Veröffentlichungstag der Anmeldung:
19.11.87 Patentblatt 87/47

(84) Benannte Vertragsstaaten:
AT CH FR GB IT LI SE

(71) Anmelder: Windmöller & Hölscher
Münsterstrasse 48-52
D-4540 Lengerich I.W.(DE)

(72) Erfinder: Upmeier, Hartmut, Dipl.-Ing.
Jahnstrasse 25
D-4540 Lengerich(DE)

(74) Vertreter: Gossel, Hans K., Dipl.-Ing. et al,
Rechtsanwälte E. Lorenz - B. Seidler M. Seidler - Dipl.-Ing.
H.K. Gossel Dr. I. Philipps - Dr. P.B. Schäuble Dr. S.
Jackermeier - Dipl.-Ing. A. Zinnecker
Widenmayerstrasse 23 D-8000 München 22(DE)

(54) Vorrichtung zum wendelförmigen Aufschneiden einer Folienschlauchbahn aus thermoplastischem Kunststoff.

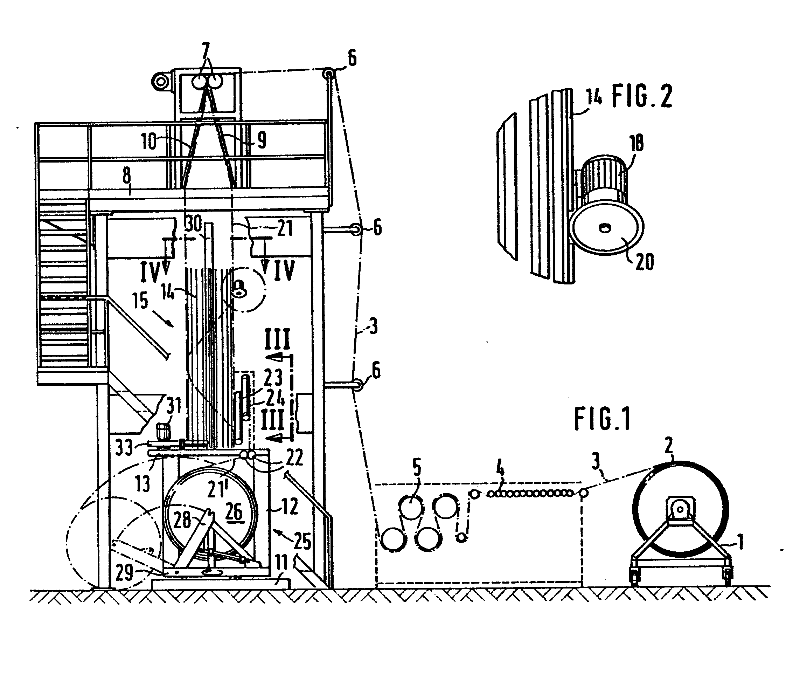

(57) Eine Vorrichtung dient zum wendelförmigen Aufschneiden einer Folienschlauchbahn (3) aus thermoplastischem Kunststoff, vorzugsweise zur Herstellung von verstreckten Flachfolienbahnen mit schräg verlaufender Verstreckungsrichtung (Orientierung der Moleküle). Sie besitzt eine Einrichtung zum zylindrischen Aufweiten eines wandernden Abschnitts der kontinuierlich vorgezogenen Folienschlauchbahn (3), Einrichtungen zum Vorziehen des aufgeweiteten Folienschlauchbahnabschnitts in axialer Richtung, ein den aufgeweiteten Folienschlauchbahnabschnitt wendelförmig auftrennendes Messer, Einrichtungen zum Abziehen der durch das Aufschneiden gebildeten Flachfolienbahn von dem aufgeweiteten Folienschlauchbahnabschnitt und eine Aufwickeleinrichtung (25), die die von dem Messer ablaufende Flachfolienbahn zu einer Vorratsrolle (26) aufwickelt. Um — ausgehend von einer verstreckten flachen Folienschlauchbahn aus thermoplastischem Kunststoff — die Herstellung einer Vorratsrolle aus einer wendelförmig von der Folienschlauchbahn abgetrennten Flachfolienbahn mit hoher Leistung zu ermöglich, ist in einem Maschinengestell (8) ein Vorzugsrollenpaar (7) für die flachliegende Folienschlauchbahn (3) angeordnet. In einem Grundrahmen (11) ist ein mit einem Drehantrieb versehener Rahmen (12) drehbar gelagert, der einen Stützdorn (15) trägt, der aus im Abstand voneinander und konzentrisch zu der Drehachse des Rahmens (12) angeordneten langgestreckten Stützelementen, wie Gleitstäben (14) besteht. Das Messer ist an dem Stützdorn (15) oder dem Rahmen (12) befestigt und trennt die Schlauchfolienbahn in ihrem Auflaufbereich auf die Gleitstäbe (14). Die Drehachse fluchtet mit dem Walzenspalt des Vorzugsrollenpaares (7) und durchsetzt dieses etwa in dessen mittlerem Bereich. Mit dem Rahmen (12) sind mindestens eine mitrotierende Wendestange (24) und eine Umlenk- oder Leitwalze (23) verbunden, über die die Flachfolienbahn zu der Aufwickelvorrichtung (25) verläuft. Die Wickelachse der Aufwickelvorrichtung (25) schneidet die Drehachse des Rahmens (12) rechtwinkelig oder fluchtet mit dieser (Fig. 1).

Windmöller & Hölscher
4540 Lengerich

---

Vorrichtung zum wendelförmigen Aufschneiden einer
Folienschlauchbahn aus thermoplastischem Kunststoff

---

Die Erfindung betrifft eine Vorrichtung zum wendelförmigen
Aufschneiden einer Folienschlauchbahn aus thermoplastischem
Kunststoff, vorzugsweise zur Herstellung von verstreckten
Flachfolienbahnen mit schräg verlaufender Verstreckungsrichtung (Orientierung der Moleküle), mit einer Einrichtung zum
zylindrischen Aufweiten eines wandernden Abschnitts der kontinuierlich vorgezogenen Folienschlauchbahn, mit Einrichtungen zum Vorziehen des aufgeweiteten Folienschlauchbahnabschnitts, mit einem den aufgeweiteten Folienschlauchbahnabschnitt wendelförmig auftrennenden Messer, mit Einrichtungen zum Abziehen der durch das Aufschneiden gebildeten Flachfolienbahn von dem aufgeweiteten Folienschlauchbahnabschnitt und mit einer Aufwickeleinrichtung, die die von dem Messer ablaufende Flachfolienbahn zu einer Vorratsrolle aufwickelt.

Vorrichtungen dieser Art, die dem wendelförmigen Aufschneiden verstreckter Folienschlauchbahnen aus thermoplastischem Kunststoff zur Herstellung beispielsweise von Kreuzlaminaten dienen, sind z.B. aus der CA-PS 782 508 und der DE-PS 10 07 500 bekannt.

Aufgabe der Erfindung ist es, eine Vorrichtung zu schaffen, die ausgehend von einer verstreckten flachen Folienschlauchbahn aus thermoplastischem Kunststoff die Herstellung einer Vorratsrolle aus einer wendelförmig von der Folienschlauchbahn abgetrennten Flachfolienbahn mit hoher Leistung gestattet.

Erfindungsgemäß wird diese Aufgabe bei einer Vorrichtung der gattungsgemäßen Art dadurch gelöst, daß in einem Maschinengestell gestellfest ein Vorzugsrollenpaar für die flachliegende Folienschlauchbahn angeordnet ist, daß in einem Grundrahmen o. dgl. ein mit einem Drehantrieb versehener Rahmen, eine Tragplatte o. dgl. drehbar gelagert sind, die einen Stützdorn tragen, der aus im Abstand voneinander und konzentrisch zu der Drehachse der Tragplatte o. dgl. angeordneten langgestreckten Stützelementen, wie Gleitstäben, besteht, daß das Messer die Schlauchfolienbahn in ihrem Auflaufbereich auf die Gleitstäbe o. dgl. auftrennt, daß die Drechachse mit dem Walzenspalt des Vorzugsrollenpaares fluchtet und dieses etwa in dessen mittlerem Bereich durchsetzt, daß mit der Tragplatte o. dgl. mindestens eine mitrotierende Wendestange und eine Umlenk- oder Leitwalze verbunden sind, über die die Flachfolienbahn zu der Aufwickelvorrichtung verläuft, und daß die Wickelachse der Aufwickelvorrichtung die Drehachse der Tragplatte rechtwinkelig schneidet oder mit dieser fluchtet.

Die erfindungsgemäße Vorrichtung gestattet das störungsfreie
Aufwickeln einer von einer zylindrisch aufgeweiteten Folienschlauchbahn wendelförmig abgetrennten Flachfolienbahn zu Vorratsrollen mit hoher Leistung. Der kontinuierlich in axialer
Richtung auf den Auflaufbereich des Stützdorns in axialer Richtung gezogene aufgeblasene Folienschlauchbahnabschnitt wird
durch das zweckmäßigerweise in Schnittrichtung angestellte
Messer wendelförmig zu einer Flachbahn aufgetrennt. Der das
Messer tragende Stützdorn dreht sich dabei relativ zu dem auf
diesen in axialer Richtung aufgezogenen aufgeblasenen Folienschlauchbahnabschnitt. Um dabei die Reibung möglichst gering
zu halten, besteht der Stützdorn aus Stützelementen oder Gleitstäben mit reibungsarmer Oberfläche. Zusätzlich kann die Reibung dadurch vermindert werden, daß der Stützdorn über seinen
Umfang oder die diesen bildenden Stützelemente mit Blasluftdüsen versehen sind, aus denen zur Reibungsverminderung Blasluft austritt.

Die mitrotierende Wendestange und Umlenkwalze gewährleistet
eine einwandfreie Abführung der wendelförmig abgetrennten Flachfolienbahn zu der Aufwickeleinrichtung. Der den zylindrisch aufgeweiteten Folienschlauchbahnabschnitt stützende und in Drehung
versetzende Stützdorn kann mit hoher Drehzahl rotieren, da
sich auch die Wickelachse der Aufwickelvorrichtung in dessen
Drehachse befindet und daher trotz hoher Drehung der mitrotierenden Aufwickelvorrichtung im wesentlichen keine Unwuchten aus den Zentrifugalkräften entstehen. Schneidet die Drehachse der Tragplatte die Wickelachse der Aufwickelvorrichtung,
muß diese mit der Tragplatte o. dgl. mitrotieren. Auf eine derartige um eine Querachse rotierende Aufwickelvorrichtung kann
verzichtet werden, wenn die Wickelachse der Aufwickelvorrichtung mit der Drehachse der Tragplatte fluchtet.

Eine gute Funktion der Vorrichtung setzt voraus, daß die Folienschlauchbahn knitter- und faltenfrei aufgeweitet und der durchlaufende, jeweils aufgeweitete Bereich verzerrungsfrei wendelförmig aufgeschnitten wird. In weiterer Ausgestaltung der Erfindung ist daher vorgesehen, daß zur Aufweitung der Folienschlauchbahn im Gestell symmetrisch zur Mittelebene des Walzenspaltes des Vorzugswalzenpaares keilförmig Stützplatten angeordnet sind, die zum Walzenspalt hin konvergieren, und daß auf der Tragplatte o. dgl. ein Blasluftrohr befestigt ist, das die diesen einfassenden Gleitstäbe des Stützdorns vorzugsweise überragt und das mit einem auf der Tragplatte angeordneten Gebläse verbunden ist. Die Blasrichtung des Blasluftrohrs ist zwischen die Stützplatten gerichtet, so daß die Folienschlauchbahn bei ihrem Ablauf von den Stützplatten zylindrisch aufgeblasen ist. Der aufgeblasene Folienschlauchbahnabschnitt wird durch die die aufgetrennte Flachfolienbahn abziehenden Einrichtungen auf den aus den Gleitstäben o. dgl. bestehenden Stützdorn gezogen. Der Stützdorn dreht sich dabei relativ zu der auf dessen Auflaufbereich in axialer Richtung gezogenen Folienschlauchbahnabschnitt.

Zweckmäßigerweise fluchtet die Achse des Blasluftrohrs mit der Drehachse der Stützplatte o. dgl.

Um die Vorrichtung schnell auf unterschiedliche Folienschlauchdurchmesser einrichten zu können, ist in weiterer Ausgestaltung der Erfindung vorgesehen, daß die Gleitstäbe um jeweils gleiche Beträge in radialer Richtung ausfahrbar und einziehbar auf der Tragplatte angeordnet sind.

Die Leistung der Vorrichtung wird zusätzlich dadurch gewährleistet, daß das Messer aus einem durch einen Motor angetriebenen Kreismesser besteht. Der Messerträger ist zweckmäßigerweise an einem der Gleitstäbe o. dgl. befestigt, so daß es
dessen radiale Bewegungen bei einer Verstellung mitmacht.

Die Aufwickelvorrichtung kann in einem mit der Tragplatte
rotierenden Rahmen mit zu deren Drehachse rechtwinkeliger Aufwickelachse angeordnet sein. Zweckmäßigerweise ist die Tragplatte o. dgl. mit einem Vorzugswalzenpaar für die Flachfolienbahn versehen, wobei die Achsen der Vorzugswalzen parallel zu
der Aufwickelachse sind. Würde der Abzug der Flachfolienbahn
nur durch den Antrieb der Wickelwelle der Vorratsrolle gebildet, könnte die Aufwickelspannung zu hoch werden.

Nach einer erfinderischen Weiterbildung ist vorgesehen, daß
zwischen dem Messer und dem Vorzugswalzenpaar eine untere
schräg stehende Umlenkwalze und eine obere schräg stehende
Wendestange angeordnet sind, über die die Flachfolienbahn zu
dem diese abziehenden Vorzugswalzenpaar verläuft. Durch die
Wendestange und die Umlenkwalze ist gewährleistet, daß die abgezogene Flachfolienbahn straff und ohne ein Verlaufen befürchten zu müssen zu der Aufwickelvorrichtung geleitet wird,
wobei das der Aufwickelvorrichtung vorgeschaltete Vorzugswalzenpaar die ebene rechtwinkelige Zuführung mit der gewünschten Wickelspannung ermöglicht. Die Funktion der Wendestange
und Umlenkwalze ist aus der DE-PS 19 48 935 an sich bekannt.
Die rotierende Umlenkwalze führt zu einer Umlenkung der Folienbahn, wobei die Mittellinien der auflaufenden und ablaufenden
Teile der Folienbahn in einer Ebene liegen. Mit reibungsarmen
Belägen versehene, nicht rotierende Wendestangen führen zu
einer winkeligen Verschiebung der Mittellinien der auflaufenden und ablaufenden Teile der Folienbahnen, wobei die Auflaufwinkel mit der Achse der Wendestange gleich den Ablaufwinkeln sind.

In weiterer Ausgestaltung der Erfindung ist vorgesehen, daß
zwischen dem Messer und dem Vorzugswalzenpaar zwei schräg
stehende Wendestangen angeordnet sind.

Um eine einfache und schnelle Verstellung des Durchmessers
des aus den Gleitstäben gebildeten Stützdorns zu ermöglichen,
ist in weiterer Ausgestaltung der Erfindung vorgesehen, daß
die Gleitstäbe o. dgl. durch kniehebelartig miteinander verbundene Lenker in ihren oberen und unteren Bereichen mit einem
zentralen Träger, vorzugsweise dem Blasluftrohr, verbunden
sind, daß die oberen, mit den Gleitstäben gelenkig verbundenen Lenker über das Kniegelenk hinaus verlängert und mit ihrem
verlängerten inneren Enden an einem auf dem Blasluftrohr o. dgl.
verschieblichen und feststellbaren Schiebering angelenkt sind
und daß die Kniegelenke der oberen und unteren Lenker durch
Koppelstangen miteinander verbunden sind.

Bei einer Verstellung des Durchmessers des Stützdorns auf
unterschiedliche Durchmesser der aufzuschneidenden Schlauchfolienbahn müssen auch die Wendestangen und gegebenenfalls
Umlenkwalzen in radialer und axialer Richtung relativ zur
Drehachse der Tragplatte verstellt werden. In weiterer Ausgestaltung der Erfindung ist daher vorgesehen, daß die Wendestangen und gegebenenfalls auch Umlenkwalzen auf einem in
Führungen der Tragplatte radial verschiebbaren Rahmen gehaltert
sind. Dabei kann eine Wendestange auf zur Drehachse der Tragplatte parallelen Führungen des verschiebbaren Rahmens verschieblich geführt sein. Das Messer kann ebenfalls parallel
zur Drehachse der Tragplatte o. dgl. verschieblich geführt
sein. Der Antrieb zur Verstellung der Wendestange und gegebenenfalls des Messergestells kann über Gestänge, Zahnstangentriebe und/oder Seilrollen und Seile o. dgl. von dem auf dem
Blasluftrohr geführten Schiebering abgeleitet sein.

Nach einer weiteren Ausgestaltung ist vorgesehen, daß die Tragplatte o. dgl. mit horizontaler Drehachse im Bereich des freien Endes eines die Gleitstäbe o. dgl. käfigartig einfassenden Tragrahmens über einen drehbaren Ring im Gestell abgestützt ist und daß die Tragplatte auf ihrer den Gleitstäben gegenüberliegenden Seite mit einem die Aufwickeleinrichtung aufnehmenden Rahmen oder Träger verbunden ist, der über einen endseitigen, in einem Ständer gelagerten Wellenzapfen mit einem Getriebemotor verbunden ist. Nach einer anderen Ausgestaltung ist vorgesehen, daß die Tragplatte o. dgl. mit horizontaler Drehachse mit einem die Gleitstäbe o. dgl. käfigartig einfassenden Tragrahmen versehen ist, der durch zwei im Abstand voneinander angeordnete drehbare Ringe drehbar im Maschinengestell gelagert und mit einem Drehantrieb versehen ist, und daß auf der den Gleitstäben gegenüberliegenden Seite der Tragplatte die mit der Drehachse der Tragplatte fluchtende, fliegend gelagerte Wickelwelle in einem Gestell gelagert ist. Dabei kann zur Erleichterung der Entnahme der fertig gewickelten Folienrolle die Wickelwelle von ihrem gestellfesten Antrieb abkuppelbar und in einem quer verfahrbaren Wagen gelagert sein.

Zweckmäßigerweise besteht der Antrieb der Aufwickeleinrichtung aus einem Drehfeldmagnetmotor, so daß das Aufwickeln ohne besondere Drehzahlregelung immer mit einer vorgegebenen Aufwickelspannung erfolgt.

Ausführungsbeispiele der Erfindung werden nachstehend anhand der Zeichnung näher erläutert. In dieser zeigen

Fig. 1 eine Seitenansicht einer ersten Ausführungsform einer Vorrichtung zum wendelförmigen Aufschneiden einer Folienschlauchbahn mit vorgeschalteter Verstreckungseinrichtung in schematischer Darstellung,

- 8 -

Fig. 2  das kreisscheibenförmige Trennmesser der Vorrichtung nach Fig. 1 in vergrößerter Darstellung,

Fig. 3  eine schematische Darstellung der aus einer Wendestange und einer Umlenkwalze bestehenden Führung für die von dem Trennmesser ablaufende
         Flachfolienbahn nach Fig. 1,

Fig. 4  eine Draufsicht auf die Vorrichtung nach Fig. 1
         in der Ebene IV-IV in Fig. 1,

Fig. 5  eine Draufsicht auf das Trennmesser nach Fig. 1,

Fig. 6  einen Schnitt durch einen Gleitstab,

Fig. 7  eine der Fig. 1 entsprechende Darstellung der
         Vorrichtung mit auf unterschiedliche Durchmesser
         eingestelltem Stützdorn,

Fig. 8  eine der Fig. 7 entsprechende Darstellung einer
         Ausführungsform mit zwei Wendestangen,

Fig. 9  eine schematische Darstellung des Laufes der abgetrennten Flachfolienbahn über zwei Wendestangen
         in einer Vorrichtung nach Fig. 8,

Fig. 10 eine Draufsicht auf die Vorrichtung nach Fig. 8
         in vergrößerter Darstellung,

Fig. 11 eine Draufsicht auf das Schneidmesser der Vorrichtung nach Fig. 8,

Fig. 12 eine Seitenansicht einer dritten Ausführungsform der Vorrichtung mit horizontal liegender Drehachse der Tragplatte,

Fig. 13 einen Schnitt durch die Drehlagerung des Stützdorns nach Fig. 12 in vergrößerter Darstellung,

Fig. 14 eine Seitenansicht einer weiteren liegenden Ausführungsform einer Vorrichtung zum wendelförmigen Aufschneiden von Folienschlauchbahnen in schematischer Darstellung,

Fig. 15 eine Draufsicht auf die Vorrichtung nach Fig. 14,

Fig. 16 eine Vorderansicht der Vorrichtung nach den Fig. 14 und 15 und

Fig. 17 eine abgewandelte Vorrichtung mit zwei Schneidmessern und zwei hintereinander angeordneten Wickelstellen mit fluchtenden Wickelachsen.

Fig. 1 zeigt eine Anlage zum Abwickeln einer Folienschlauchbahn von einer Vorratsrolle, zum Verstrecken der abgewickelten Folienschlauchbahn, zum Thermofixieren der verstreckten Folienschlauchbahn, zum zylindrischen Aufweiten der flachen Folienschlauchbahn und zum wendelförmigen Aufschneiden und Aufwickeln der durch das Aufschneiden gebildeten Flachfolienbahn.

In einem verfahrbaren Gestell 1 ist eine Vorratsrolle 2 gelagert, von der eine flache Folienschlauchbahn 3 abgezogen wird. Diese Folienschlauchbahn wird in bekannter Weise zwischen den Reckwalzen 4 einer Verstreckungseinrichtung verstreckt. Die verstreckte Folienbahn läuft anschließend über beheizte Walzen 5 und wird dadurch thermofixiert. Die verstreckte und thermofixierte Schlauchfolienbahn 3 läuft anschließend über Leitwalzen 6 durch den Klemmspalt eines Vorzugsrollenpaares 7, dessen Vorzugsrollen am oberen Ende eines gerüstartigen Gestells 8 gelagert und mit einem Drehantrieb versehen sind. In dem Gestell 8 sind keilförmig zueinander angeordnete Stützplatten 9, 10 befestigt, die zu dem Walzenspalt des Vorzugswalzenpaares 7 hin konvergieren und deren gemeinsame Mittelebene mit der durch den Walzenspalt verlaufenden Mittelebene des Vorzugswalzenpaares 7 fluchtet.

Unterhalb der Stützplatten 9, 10 ist auf einem Podest 11 ein mit einem Drehantrieb versehener Rahmen 12 drehbar gelagert, wobei die vertikale Drehachse des Rahmens 12 in der durch den Walzenspalt der Vorzugswalzen 7 verlaufenden Mittelebene liegt und das Vorzugswalzenpaar 7 mittig durchsetzt. Der Rahmen 12 trägt an seinem oberen Ende eine zentrale Tragplatte 13, auf der konzentrisch zur Drehachse und parallel zu dieser in gleichen Abständen Gleitstäbe 14 befestigt sind, die insgesamt einen Stützdorn 15 bilden.

An einem Gleitstab 14 ist ein Träger für den Motor 18 befestigt, auf dessen Welle ein Kreismesser 20 befestigt ist, das zwischen zwei Gleitstäben 14 des Stützdorns 15 die zu einem zylindrischen Folienschlauchabschnitt 21 aufgeweitete Folienschlauchbahn 3 auftrennt. Durch dieses Auftrennen wird eine Flachfolienbahn gebildet, in der die Verstreckungsrichtung entsprechend dem Aufschneidwinkel schräg verläuft. Diese Flachfolienbahn 21 wird durch ein unterhalb eines Durchtrittsschlitzes der Tragplatte 13 angeordnetes Vorzugswalzenpaar 22 über den Stützdorn 15, die Umlenkwalze 23 und die Wendestange 24 vorgezogen und fluchtend dem Wickelkern der Aufwickelvorrichtung 25 zugeführt und zu der Vorratsrolle 26 aufgewickelt. Die Aufwickeleinrichtung 25 ist in dem Rahmen 12 angeordnet und rotiert daher mit. Die Aufwickelvorrichtung ist mit einem nicht dargestellten, mitrotierenden Antrieb versehen. Die Wickelachse der Aufwickelvorrichtung 25 verläuft rechtwinkelig zu der Drehachse der Tragplatte 13 und schneidet diese. Zur Entnahme der fertig gewickelten Rolle 26 ist die Wickelvorrichtung 25 mit ausschwenkbaren, die Wickelachse oder den Wickelkern tragenden Trägern 28 versehen, die schwenkbar auf der einen Drehtisch bildenden Grundplatte 29 des Rahmens 12 gelagert sind.

Auf der Tragplatte ist ein zentrales Blasrohr 30 befestigt, dessen Achse mit der Drehachse des Rahmens 12 bzw. des Stützdorns 15 fluchtet. Das Blasluftrohr 30 weist an seinem unteren Ende einen Anschlußstutzen auf, in den der Auslaß des von dem Motor 31 angetriebenen Gebläses 32 mündet, das ebenfalls auf der Tragplatte 13 befestigt ist.

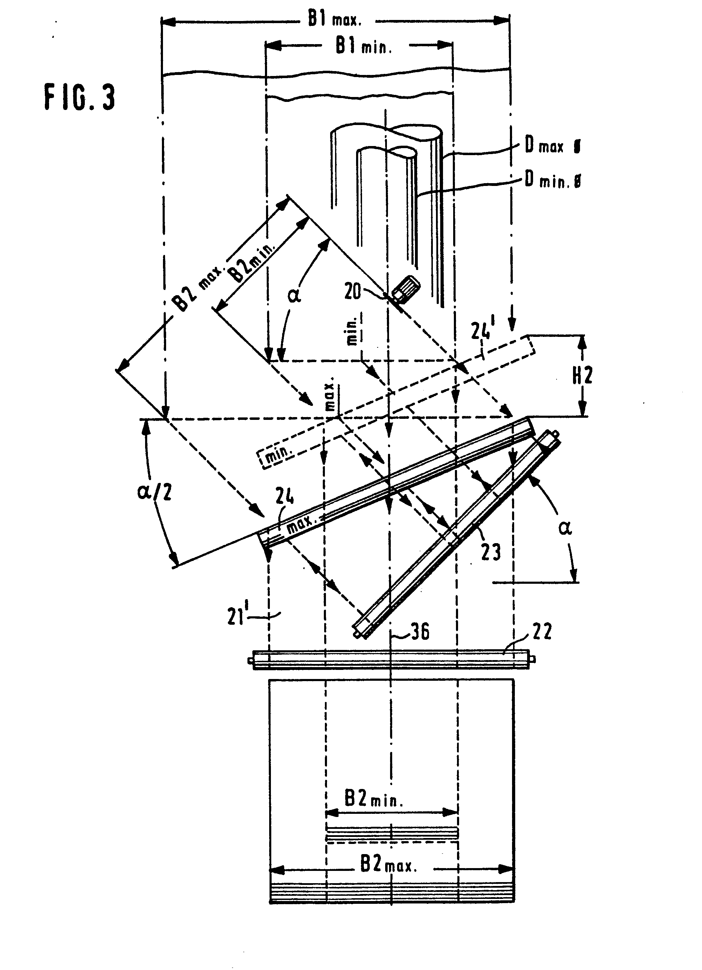

Fig. 3 zeigt eine vergrößerte Draufsicht auf die Umlenkwalze 23 und die Wendestange 24 in Richtung der Pfeile III in Fig. 1 in schematisierter Darstellung. In Fig. 3 bedeutet die Breite Blmax den Umfang des breitesten zu verarbeitenden Folienschlauches, also die Breite der Flachfolienbahn, die sich bei dessen Aufschneiden in axialer Richtung ergibt. Entsprechend bedeutet B2min die Breite des Flachfolienschlauches, die sich ergibt, wenn der kleinste Folienschlauch mit dem Durchmesser Dmin in axialer Richtung aufgeschnitten wird.

Da das Trennmesser 20 um den Winkel $\alpha$ spitzwinkelig zur Schlauchfolienachse angestellt ist, ergeben sich bei dem Aufschneiden von Folienschläuchen mit größtem und kleinstem Durchmesser Flachbahnen mit entsprechend geringerer Breite B2max und B2min.

Die von dem Trennmesser 20 ablaufende Flachfolienbahn läuft zunächst über die Umlenkwalze 23, die um den Schnittwinkel $\alpha$

zur Drehachse 36 geneigt ist. Von der Umlenkwalze 23 läuft die Flachfolienbahn über die Wendestange 24 zu dem Vorzugswalzenpaar 22.

Eine gerade Zuführung der Flachfolienbahn 21 zu dem Vorzugswalzenpaar 22 wird dadurch erreicht, daß die Wendestange 24 nur um den Winkel /2 zu der Drehachse 36 geneigt ist.

Wie aus Fig. 3 ersichtlich ist, muß bei einer Änderung des Schlauchfoliendurchmessers von Dmax auf Dmin die Wendestange 24 um die Strecke H2 in axialer Richtung verfahren werden. Daneben müssen selbstverständlich auch die Umlenkwalze 23 und die Wendestange 24 entsprechend der Durchmesseränderung des Stützdorns 15 in radialer Richtung verfahren werden.

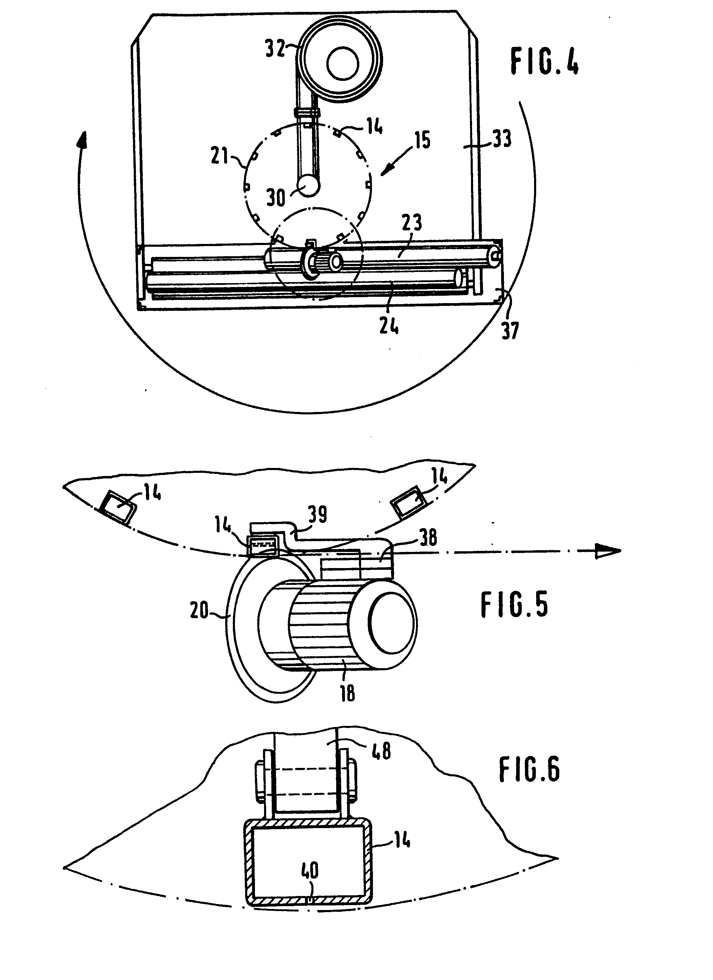

Die Draufsicht gemäß Fig. 4 zeigt die radiale Stellung der Umlenkwalze 23 und der Wendestange 24 relativ zu dem Stützdorn 15. Die Umlenkwalze 23 und die Wendestange 24 sind in einem Rahmen 37 gelagert, der relativ zu dem Stützdorn 15 in radialer Richtung auf der Tragplatte 33 verfahrbar geführt ist.

Die Befestigung des Trägers 38 des Motors 18 des Schneidmessers 20 ist in vergrößerter Darstellung aus Fig. 5 ersichtlich. Der Träger 38 ist durch einen abgekröpften Bügel 39 durch eine Manschette an einem Gleitstab 14 befestigt. Die Manschette ist, falls erforderlich, entsprechend der Durchmesseränderung des Stützdorns 15 höhenverstellbar und auf dem Gleitstab 14 festklemmbar.

Die Gleitstäbe 14 bestehen, wie aus Fig. 6 ersichtlich, aus Kastenprofilen und sind in ihrem Inneren durch Druckluft beaufschlagt und weisen an ihren äußeren Stirnflächen Bohrungen 40 auf, die der Reibungsverminderung dienende Blasluftdüsen bilden.

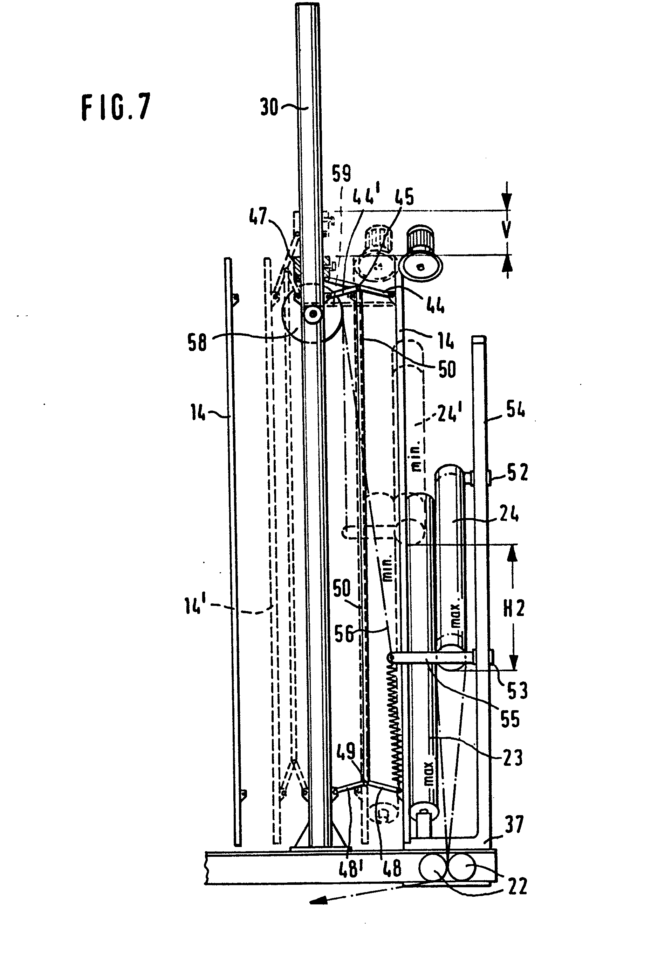

In Fig. 7 ist die radial äußerste Stellung der Gleitstäbe 14 mit voll ausgezogenen Linien und die radial innerste Stellung der Gleitstäbe mit gestrichelten Linien 14' dargestellt. Zur Verstellung der Gleitstäbe 14 zwischen der inneren und äußeren Stellung sind durch ein Kniegelenk 45 miteinander kniehebelartig verbundene Lenker 44, 44' vorgesehen, deren äußere Enden einerseits im oberen Bereich der Gleitstäbe 14 an diesen und deren inneren Enden an dem zentralen Blasluftrohr 30 angelenkt sind. Der Lenker 44 ist über das Kniehebelgelenk 45 hinaus verlängert und mit seinem inneren Ende an einem Schiebering 47 angelenkt. Die unteren Bereiche der Gleitstäbe 14 sind in entsprechender Weise durch kniehebelartig miteinander verbundene Lenker 48, 48' mit dem zentralen Blasluftrohr 30 gelenkig verbunden. Darüber hinaus ist das untere Kniegelenk 49 durch eine Koppelstange 50 mit dem oberen Kniegelenk 45 gelenkig verbunden. Durch diese Ausgestaltung wird ein Verschiebemechanismus geschaffen, der eine Verstellung der Gleitstäbe 14 in radailer Richtung zu dem Blasluftrohr 30 nur durch axiale Verschiebung des Schieberinges 47 gestattet, der in der gewünschten Stellung durch eine Klemmschraube auf dem Blasluftrohr 30 festgeklemmt wird.

Entsprechend der radialen Verstellung der Gleitstäbe 14 muß auch die Wendestange 24 in ihrer Höhe verstellt werden. Hierzu ist die Wendestange 24 durch Gleitbuchsen 52, 53 auf vertikalen Streben 54 des Rahmens 37 in axialer Richtung verschieblich geführt. Zur Verschiebung sind die Gleitbuchsen mit einem Hebel 55 verbunden, der durch ein Seil 56 angehoben und abgesenkt werden kann. Das Seil 56 ist auf eine Seiltrommel 58 aufgewickelt, die auf einer horizontalen Achse drehbar gelagert ist, die an dem zentralen Blasluftrohr 30 befestigt ist. Zum Antrieb der Seiltrommel 58 ist diese mit einem Zahnrad versehen, das mit einer Zahnstange 59 kämmt, die mit einem Gleitstab 14 verbunden ist. Dabei ist der Verstellmechanismus so ausgelegt, daß bei einer Verstellung der Gleitstäbe von der äußersten auf die innerste Stellung 14' die Wendestange 24 aus der in vollen Linien dargestellten Stellung in die in gestrichelten Linien dargestellte Stellung 24' um die Strecke H2 angehoben wird.

Das nach innen ragende Ende des Hebels 56 ist durch eine Zugfeder mit dem Anlenkbereich des Lenkers 48 an dem Gleitstab 14 verbunden, die die Wendestange 24 in ihre untere Stellung zu ziehen trachtet.

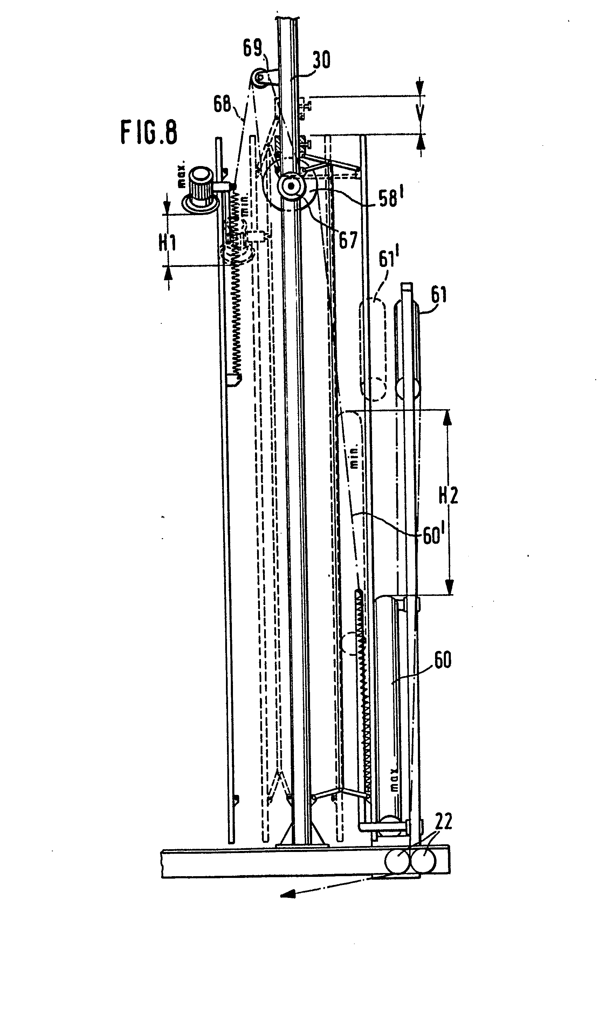

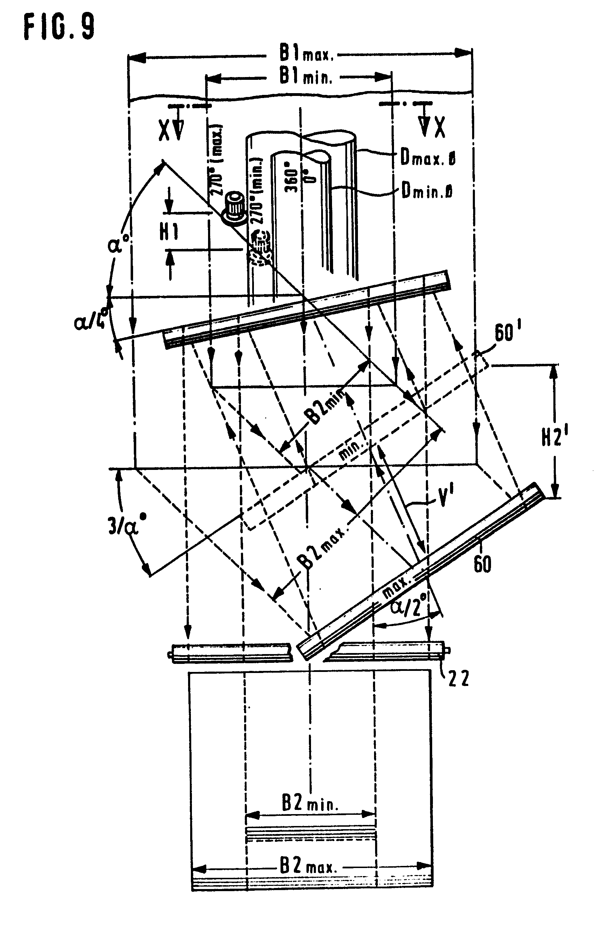

In Fig. 8 ist eine Ausführungsform mit zwei Wendestangen 60, 61 dargestellt. Bei einer Verstellung der Gleitstäbe 14 von ihrer äußersten auf ihre innerste Stellung muß die untere Wendestange 60 neben ihrer radialen Verschiebung in axialer Richtung um die Strecke H2 in die gestrichelte Stellung 60' angehoben werden, wie dies besonders deutlich aus Fig. 9 ersichtlich ist, die eine Draufsicht auf die Wendestangenanordnung nach Fig. 8 zeigt. Aus Fig. 9 ist in einer der Fig. 3 entsprechenden Weise ebenfalls ersichtlich, wie die Verhältnisse sich bei einer Umstellung von dem größtmöglichen auf den kleinstmöglichen Schlauchdurchmesser ändern.

Auch bei der Ausführungsform nach Fig. 8 ist eine Zugfeder vorgesehen, die bestrebt ist, die Wendestange 60 in ihrer unteren Stellung zu halten.

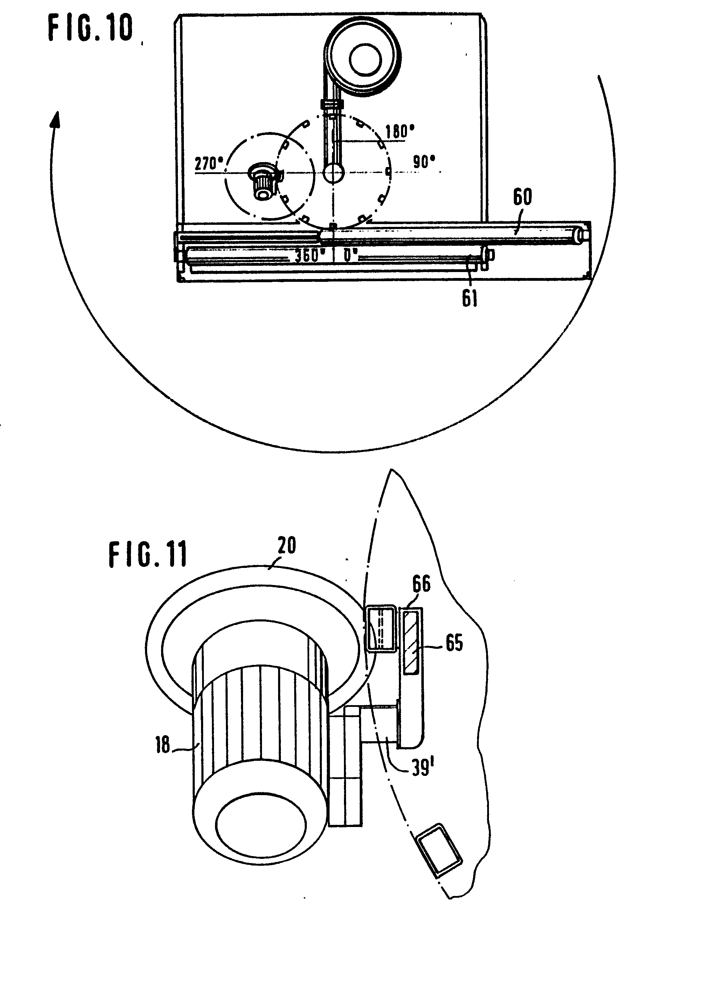

Fig. 10 zeigt eine Draufsicht auf die Ausführungsform nach Fig. 8. Da bei der Ausführungsform nach Fig. 8 auch das Kreismesser 20 in axialer Richtung verschieblich angeordnet sein muß, ist zusätzlich ein Führungsprofil 65 vorgesehen, das der Träger 39' der Tragplatte des Motors 18 mit einer Gleitbuchse 66 umfaßt. Zur Höhenverstellung des Motors ist die Seiltrommel 58' achsgleich mit einer kleineren Seiltrommel 67 versehen, auf die ein die Schneidvorrichtung 18, 20 hebendes
und absenkendes Seil 68 aufgewickelt ist, das über eine Umlenkrolle 69 läuft, die an dem zentralen Blasluftrohr 30
frei drehbar gelagert ist.

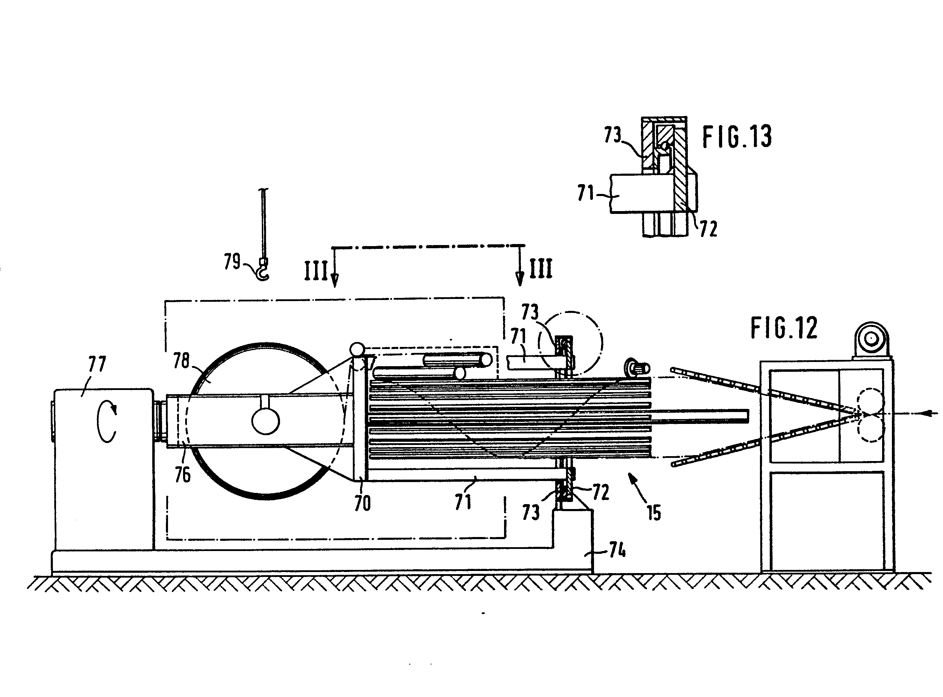

Bei der Ausführungsform nach Fig. 12 ist die zentrale Tragplatte 70 um eine horizontale Achse drehbar gelagert, so daß
die ganze Vorrichtung eine liegende Anordnung hat. Mit der
Tragplatte 70 sind achsparallele Träger 71 verbunden, die den
aus den Gleitstäben gebildeten Stützdorn 15 gleichsam käfigförmig einfassen. An ihren äußeren Enden sind die Träger 71
mit einem Ring 72 verbunden, der über ein Kugellager auf einem
Ring 73 gelagert ist, der fest mit dem Maschinengestell 74
verbunden ist.

Auf ihrer Rückseite ist die Tragplatte mit einem Träger 76
verbunden, der endseitig einen Zapfen aufweist, der in dem
Gestell 77 drehbar gelagert und über einen Getriebemotor angetrieben ist. In dem Rahmen 76 ist die Aufwickeleinrichtung
mit Antriebseinheit gelagert. Die fertige Wickelrolle 78 aus
Flachfolie kann nach entsprechender Ausrichtung durch den
Kran 79 ausgehoben werden.

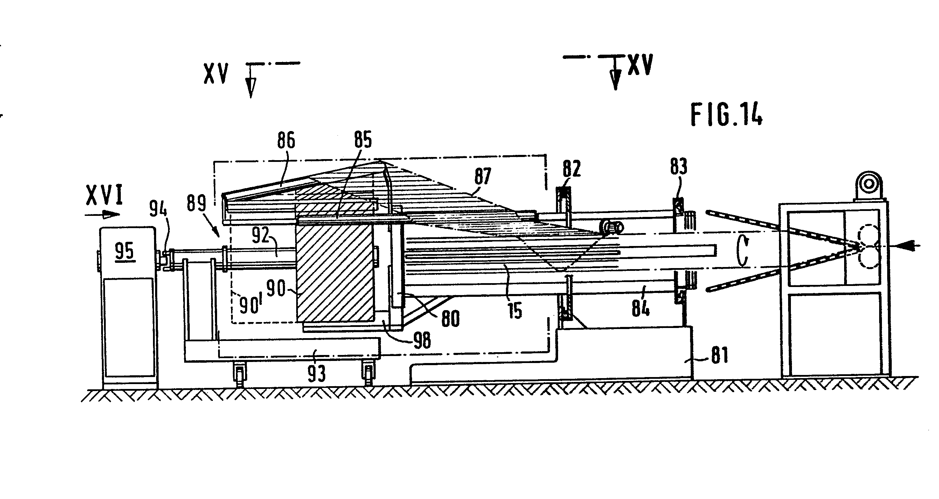

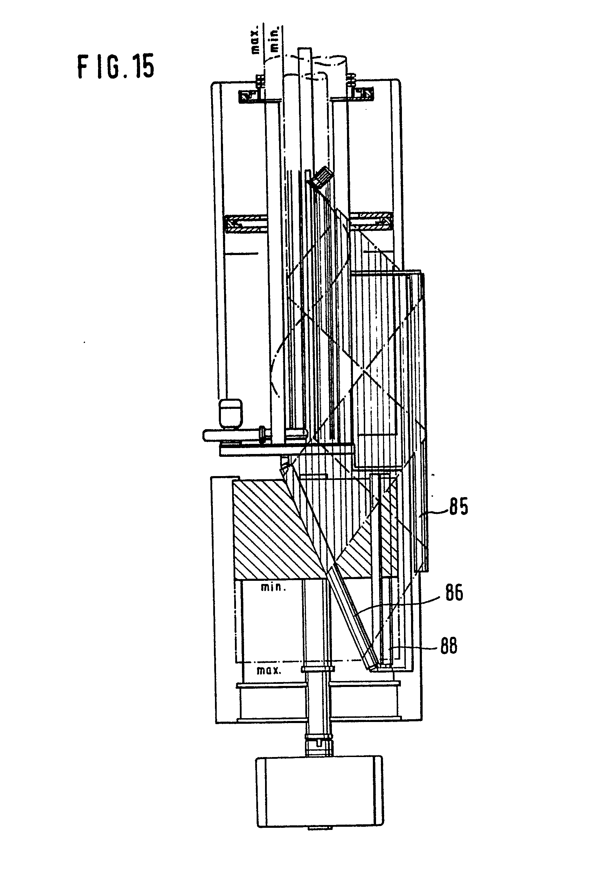

Bei der Ausführungsform nach Fig. 14 ist der Stützdorn 15 mit
endseitiger Tragplatte 80 nach hinten frei auskragend fliegend in dem Maschinengestell 81 durch zwei Ringanordnungen
82, 83 gelagert, wobei die jeweiligen Innenringe an käfigförmigen Trägern 84 befestigt sind, die mit der Tragplatte 80
verbunden sind. Der Innenring der Ringanordnung 82 ist mit
einer nicht dargestellten Verzahnung versehen, mit der zum
Antrieb des Stützdorns 15 und der Tragplatte 80 ein von einem
Motor angetriebenes Ritzel kämmt. Mit der Tragplatte 80
sind diese nach hinten überragende Wendestangen 85, 86 verbunden, über die die durch wendelförmiges Aufschneiden des Folienschlauches gebildete Flachbahn 87 über das Vorzugsrollenpaar 88 auf die Wickeleinrichtung 89 läuft und zu der Wickelrolle 90 aufgewickelt wird. Aus den Fig. 14 und 15 ist das wendelförmige Aufschneiden einer Schlauchfolienbahn mit kleinstem Durchmesser ersichtlich. Wird eine Schlauchfolienbahn mit größtem Durchmesser aufgeschnitten, erreicht die Wickelrolle die durch gestrichelte Linien 90' eingezeichnete Breite.

Die Wickelwelle 92 ist fliegend in einem Wagen 93 gelagert, wobei der Zapfen der Wickelwelle durch eine lösbare Kupplung 94 mit dem Abtriebszapfen eines Motors oder Getriebemotors verbindbar ist, der in dem Ständer 95 angeordnet ist. Nach Lösen der Kupplungsverbindung 94 läßt sich der Wagen quer aus der Vorrichtung zur Entnahme der Wickelrolle herausfahren.

Bei der Ausführungsform nach den Fig. 14 und 15 fluchtet die Achse der Wickelwelle 92 mit der Drehachse des Stützdorns 15, so daß die Wickelwelle nur die Aufwickelbewegung zu vollziehen braucht und nicht zusätzlich noch um eine Querachse mitrotieren muß.

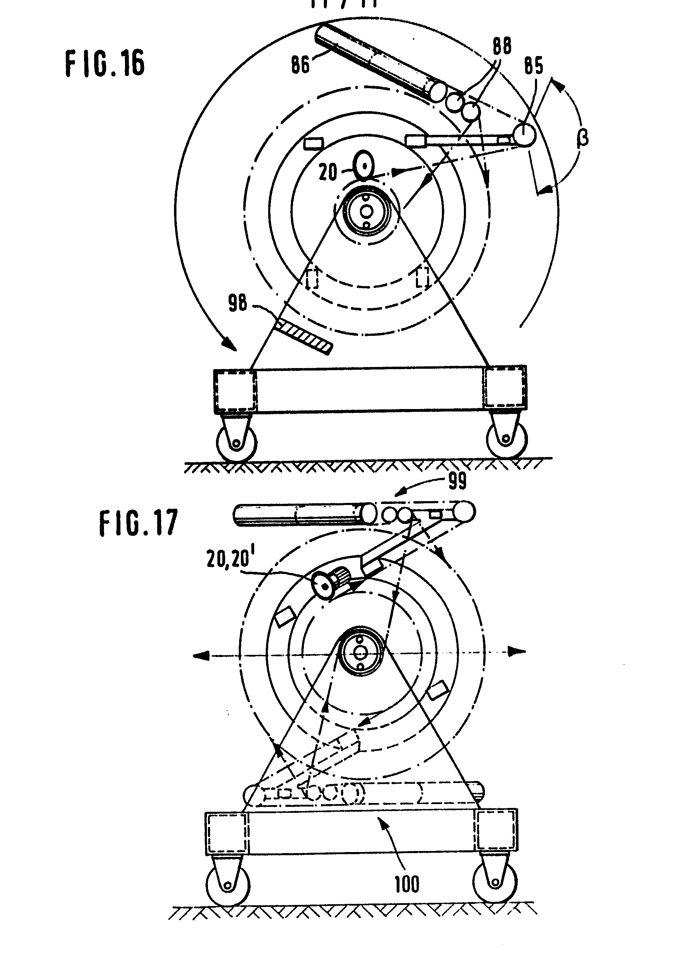

Aus Fig. 16 ist ersichtlich, wie die von dem Trennmesser 20 ablaufende Folienbahn über die erste Wendestange 85, die zwei-te Wendestange 86 und das Vorzugsrollenpaar 88 auf den Wickelkern bzw. die sich bildende Vorratsrolle aufläuft. Der Drehtisch ist gegenüberliegend zu der Wendestangenanordnung mit einem Gegengewicht 98 versehen, das eine durch die Wendestangenanordnung verursachte Unwucht ausgleicht.

Bei dem Ausführungsbeispiel nach Fig. 17 sind zwei in axialer Richtung hintereinanderliegende Trennmesser 20, 20' vorgesehen, durch die von der Schlauchfolienbahn zwei zueinander parallele Flachfolienbahnen abgetrennt werden. Die erste Flachfolienbahn läuft über die Wendestangen-Vorzugsrollenanordnung 99 auf ihren Wickelkern und die zweite über die Wendestangen-Vorzugsrollenanordnung 100 auf die zweite Wickeleinrichtung, deren Wickelachse fluchtend zu der Wickelachse der ersten Aufwickelvorrichtung angeordnet ist. Beide Wickelachsen fluchten mit der Drehachse des Stützdorns 15.

34 736 **0245643**

Windmöller & Hölscher,
4540 Lengerich

---

Vorrichtung zum wendelförmigen Aufschneiden einer
Folienschlauchbahn aus thermoplastischem Kunststoff

---

Patentansprüche:

1. Vorrichtung zum wendelförmigen Aufschneiden einer Folienschlauchbahn aus thermoplastischem Kunststoff, vorzugsweise zur Herstellung von verstreckten Flachfolienbahnen mit schräg verlaufender Verstreckungsrichtung (Orientierung der Moleküle),

mit einer Einrichtung zum zylindrischen Aufweiten eines wandernden Abschnitts der kontinuierlich vorgezogenen Folienschlauchbahn,

mit Einrichtungen zum Vorziehen des aufgeweiteten Folienschlauchbahnabschnitts in axialer Richtung,

mit einem den aufgeweiteten Folienschlaucbahnabschnitt wendelförmig auftrennenden Messer,

mit Einrichtungen zum Abziehen der durch das Aufschneiden gebildeten Flachfolienbahn von dem aufgeweiteten
Folienschlauchbahnabschnitt und

mit einer Aufwickeleinrichtung, die die von dem
Messer ablaufende Flachfolienbahn zu einer Vorratsrolle
aufwickelt,

dadurch gekennzeichnet,

daß in einem Maschinengestell gestellfest ein Vorzugsrollenpaar für die flachliegende Folienschlauchbahn angeordnet ist,

daß in einem Grundrahmen o. dgl. ein mit einem
Drehantrieb versehener Rahmen, eine Tragplatte o. dgl.
drehbar gelagert sind, die einen Stützdorn tragen, der
aus im Abstand voneinander und konzentrisch zu der Drehachse der Tragplatte o. dgl. angeordneten langgestreckten
Stützelementen, wie Gleitstäben, besteht,

daß das Messer an dem Stützdorn oder dem Rahmen
befestigt ist und die Schlauchfolienbahn in ihrem Auflaufbereich auf die Gleitstäbe o. dgl. auftrennt,

daß die Drehachse mit dem Walzenspalt des Vorzugsrollenpaares fluchtet und dieses etwa in dessen mittlerem
Bereich durchsetzt,

daß mit der Tragplatte o. dgl. mindestens eine mitrotierende Wendestange und eine Umlenk- oder Leitwalze verbunden sind, über die die Flachfolienbahn zu der Aufwickelvorrichtung verläuft, und

daß die Wickelachse der Aufwickelvorrichtung die
Drehachse der Tragplatte rechtwinkelig schneidet oder mit
dieser fluchtet.

2. Vorrichtung nach Anspruch 1, dadurch gekennzeichnet, daß
zur Aufweitung der Folienschlauchbahn im Gestell symmetrisch zur Mittelebene des Walzenspaltes der Vorzugswalzen keilförmig Stützplatten angeordnet sind, die zum Walzenspalt oder Vorzugswalzen hin konvergieren, und daß auf
der Tragplatte o. dgl. ein Blasluftrohr befestigt ist, das
die diese einfassenden Leitstäbe des Stützdorns vorzugsweise überragt und das mit einem auf der Tragplatte angeordneten Gebläse verbunden ist.

3. Vorrichtung nach Anspruch 2, dadurch gekennzeichnet, daß
die Achse des Blasluftrohres mit der Drehachse der Stützplatte o. dgl. fluchtet.

4. Vorrichtung nach einem der Ansprüche 1 bis 3, dadurch gekennzeichnet, daß die Gleitstäbe um jeweils gleiche Beträge in radialer Richtung ausfahrbar und einziehbar auf
der Tragplatte angeordnet sind.

5. Vorrichtung nach einem der Ansprüche 1 bis 4, dadurch gekennzeichnet, daß das Messer aus einem durch einen Motor
angetriebenen Kreismesser besteht.

6. Vorrichtung nach einem der Ansprüche 1 bis 5, dadurch gekennzeichnet, daß das an einem Gleitstab oder dem Stützdorn befestigte Messer relativ zu dem aufzutrennenden Schlauchfolienabschnitt entsprechend der Steigung des jeweiligen wendelförmigen Schnitts winkelig angestellt ist.

7. Vorrichtung nach einem der Ansprüche 1 bis 6, dadurch gekennzeichnet, daß die Aufwickelvorrichtung in einem mit der Tragplatte mitrotierenden Rahmen mit zu deren Drehachse rechtwinkeliger Aufwickelachse angeordnet ist.

8. Vorrichtung nach einem der Ansprüche 1 bis 7, dadurch gekennzeichnet, daß die Tragplatte o. dgl. mit einem Vorzugswalzenpaar für die Flachfolienbahn versehen ist und daß die Achsen der Vorzugswalzen parallel zu der Aufwickelachse der Vorratsrolle sind.

9. Vorrichtung nach einem der Ansprüche 1 bis 8, dadurch gekennzeichnet, daß zwischen dem Messer und dem Vorzugswalzenpaar eine untere, schräg stehende Umlenkwalze und eine obere, schräg stehende Wendestange angeordnet ist, über die die Flachfolienbahn zu dem diese abziehenden Vorzugswalzenpaar verläuft (Fig. 1 und Fig. 3).

10. Vorrichtung nach einem der Ansprüche 1 bis 8, dadurch gekennzeichnet, daß zwischen dem Messer und dem Vorzugswalzenpaar zwei schräg stehende Wendestangen angeordnet sind (Fig. 8 und Fig. 9).

11. Vorrichtung nach einem der Ansprüche 1 bis 10, dadurch gekennzeichnet, daß die Gleitstäbe o. dgl. durch kniehebelartig miteinander verbundene Lenker in ihren oberen und unteren Bereichen mit einem zentralen Träger, vorzugsweise mit dem Blasluftrohr, verbunden sind, daß die oberen mit den Gleitstäben gelenkig verbundenen Lenker über das Kniehebelgelenk hinaus verlängert und mit ihren verlängerten
inneren Enden an einem auf dem Blasluftrohr verschieblichen
und feststellbaren Schiebering angelenkt sind und daß die
Kniegelenke der oberen und unteren Lenker durch Koppelstangen miteinander verbunden sind.

12. Vorrichtung nach einem der Ansprüche 1 bis 11, dadurch gekennzeichnet, daß die Wendestangen und gegebenenfalls Umlenkwalzen auf einem in Führungen der Tragplatte radial
verschieblichen Rahmen gehaltert sind.

13. Vorrichtung nach einem der Ansprüche 1 bis 12, dadurch gekennzeichnet, daß eine Wendestange auf zur Drehachse der
Tragplatte parallelen Führungen des verschieblichen Rahmens verschieblich geführt und feststellbar ist.

14. Vorrichtung nach einem der Ansprüche 1 bis 13, dadurch gekennzeichnet, daß das Messer parallel zur Drehachse der
Tragplatte o. dgl. verschieblich geführt ist.

15. Vorrichtung nach einem der Ansprüche 1 bis 14, dadurch gekennzeichnet, daß der Antrieb zur Verstellung der Wendestange und gegebenenfalls der Messeranordnung über Gestänge, Zahnstangentriebe und/oder Seilrollen und Seile o.
dgl. von dem auf dem Blasluftrohr geführten Schiebering
abgeleitet ist.

16. Vorrichtung nach Anspruch 1, dadurch gekennzeichnet, daß
die Tragplatte o. dgl. mit horizontaler Drehachse im Bereich des freien Endes eines die Gleitstäbe o. dgl. käfigartig einfassenden Tragrahmens über einen drehbaren Ring
im Gestell abgestützt ist und daß die Tragplatte auf ihrer

P

den Gleitstäben gegenüberliegenden Seite mit einem die
Aufwickeleinrichtung aufnehmenden Rahmen oder Träger verbunden ist, der über einen endseitigen, in einem Ständer
gelagerten Wellenzapfen mit einem Motor oder Getriebemotor
verbunden ist.

17. Vorrichtung nach Anspruch 1, dadurch gekennzeichnet, daß
die Tragplatten o. dgl. mit horizontaler Drehachse mit
einem die Gleitstäbe o. dgl. käfigartig einfassenden Tragrahmen versehen ist, der durch zwei im Abstand voneinander
angeordnete drehbare Ringe drehbar im Maschinengestell
gelagert und mit einem Drehantrieb versehen ist, und daß
auf der den Gleitstäben gegenüberliegenden Seite der Tragplatte die mit der Drehachse der Tragplatte fluchtende,
fliegend gelagerte Wickelwelle in einem Gestell gelagert
ist.

18. Vorrichtung nach Anspruch 17, dadurch gekennzeichnet, daß
die Wickelwelle von ihrem gestellfesten Antrieb abkuppelbar und in einem quer verfahrbaren Wagen gelagert ist.

19. Vorrichtung nach Anspruch 17 oder 18, dadurch gekennzeichnet, daß der Antrieb der Aufwickelvorrichtung aus einem
Drehfeldmagnetmotor besteht.

0245643

FIG.1

FIG.2

FIG.3

0245643

FIG.4

FIG.5

FIG.6

FIG.7

4 / 11

0245643

FIG.8

## FIG.9

0245643

FIG.10

270°    180°    90°

360°   0°

60

61

FIG.11

20

66

65

18

39'

FIG.13

FIG.12

8 / 11

0245643

FIG.14

FIG. 15

FIG.16

FIG.17